# EUROPEAN PATENT SPECIFICATION

(11) **EP 2 349 600 B1**
(45) Date of publication and mention of the grant of the patent: **22.05.2019**
(21) Application number: 09785629.8
(22) Date of filing: 11.09.2009
(51) Int. Cl.: B21D 11/06, B21D 53/02, F28D 7/00, F28F 9/013, F28F 27/02, B29C 53/32

(54) **MANDREL AND METHOD FOR FORMING A HEAT EXCHANGE UNIT**
DORN UND VERFAHREN ZUM HERSTELLEN EINER WÄRMEAUSTAUSCHEINHEIT
MANDRIN ET MÉTHODE POUR FORMER UNE UNITÉ D'ÉCHANGE DE CHALEUR

(30) Priority: 12.09.2008 GB 0816710
(43) Date of publication of application: 03.08.2011
(73) Proprietor: CiTech Energy Recovery System Malaysia Sdn. Bhd., Selangor Darul Ehsan (MY)
(72) Inventor: NORMANDALE, David, Scarborough North Yorkshire YO12 5QL (GB); BURTON, Neil, Hull HU9 5NP (GB); WICKHAM, Mark, London W7 2QE (GB)
(74) Representative: Foot, Paul Matthew James
(86) International application number: PCT/GB2009/051174
(87) International publication number: WO 2010/029367

(56) References cited:
- DE-C- 468 401
- GB-A- 1 023 287
- US-A- 1 726 279
- US-A- 2 771 934

## Description

The present application relates to a mandrel for forming helically coiled heat exchange tubes according to the preamble of claim 1. Such a mandrel is for example disclosed in US-A-2771934. The present application additionally relates to a method of forming a heat exchange array.

EP1088194 granted to a predecessor company of the present applicant discloses a heat exchange unit primarily intended to recover heat from the exhaust gas produced by gas turbines and gas/diesel engines used on offshore platforms and the like. Further examples of known mandrels are disclosed in DE468401 and GB1023287.

EP1088194 discloses the general layout of a heat exchange unit having an annular heat exchange duct with an array of heat exchange pipes located therein and a bypass duct located concentrically within the heat exchange duct. A cylindrical sleeve valve is located between the two ducts and is movable along its axis to switch the flow of exhaust gas between a duty mode in which the gas flows through the heat exchange duct and a bypass mode which, as the name suggests, causes the gas to flow through the bypass duct and therefore not to transfer heat to the array of heat exchange pipes.

Compared to previous heat exchange units used in these applications, this layout has been found to be compact, efficient and safe. In particular, the use of the movable sleeve valve ensures that the flow of exhaust gas can never be blocked, meaning that there is no danger of a back pressure damaging the engine or turbine to which the heat exchange is connected.

The applicant has, nevertheless, recognised that the operational efficiency of this type of heat exchange unit may be improved, as may its method of manufacture. Furthermore, improvements may be made to enable maintenance of such heat exchange units to be simplified.

The present invention seeks to overcome, or at least mitigate, the problems of the prior art. A first aspect of the present invention provides a mandrel for forming helically coiled heat exchange tubes, the mandrel comprising a roller to form the tube into a helical coil, a drive for rotating the roller, a carriage for indexing the tube with respect to the roller, wherein the roller comprises a plurality of winding beams, which beams are arranged to be radially movable by associated powered adjustable supports so as to permit rapid setting of the radius of a heat exchange coil formed on the roller, wherein at least one winding beam comprises a slotted coil support bracket to maintain the pitch between adjacent sections of the helix.

By providing a powered adjustment for the beams changeovers can be achieved more rapidly than for prior art mandrels which require time-consuming disassembly and reassembly thereof to adjust the radius.

A second aspect of the present invention provides a method of forming a heat exchanger array using a mandrel according to the preceding paragraph, the method comprising the steps of:
a) providing at least one coil support bracket on a winding beam;
b) setting the required radius of the winding beams;
c) holding one end of the heat exchange tube to the roller;
d) rotating the roller, whilst feeding the heat exchange tube and indexing the tube along a length of the roller to form a helically coiled tube string;
e) removing the coiled string from the roller; and
f) repeating steps a) to e) to form a further coiled string of a differing diameter.

Embodiments of the present invention will now be described, with reference to the accompanying drawings, in which:
FIGURE 1 is a vertical cross-section through a heat exchange unit in a duty condition;
FIGURE 2 is a similar vertical cross-section to Figure 1 but in a bypass condition;
FIGURE 3 is a side view of a mandrel according to a preferred embodiment of the present invention;
FIGURE 4 is an end view of a mandrel of Figure 3;
FIGURE 5 is a cross-section along the rotational axis of the mandrel of Figure 3, showing the mandrel in two different states;
FIGURE 6 is an isometric view of a section of a support bracket for a heat exchange coil string of the heat exchange unit of Figure 1 in a non-assembled condition;
FIGURE 7 is a view of the bracket of Figure 6 when assembled with an associated coil string;

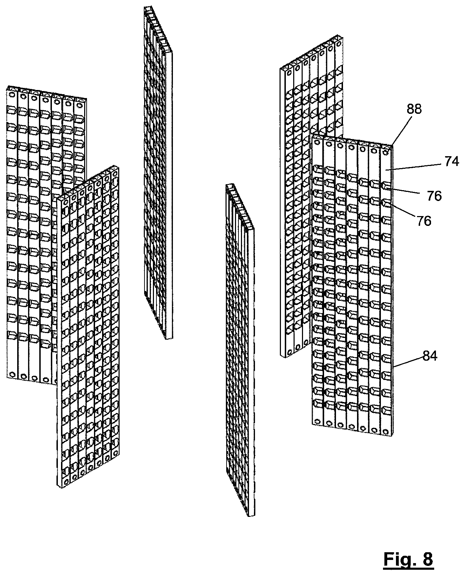

FIGURE 8 is an isometric view of blocks of support brackets for holding together a complete array of heat exchange tubing coil strings, with the tubing omitted;

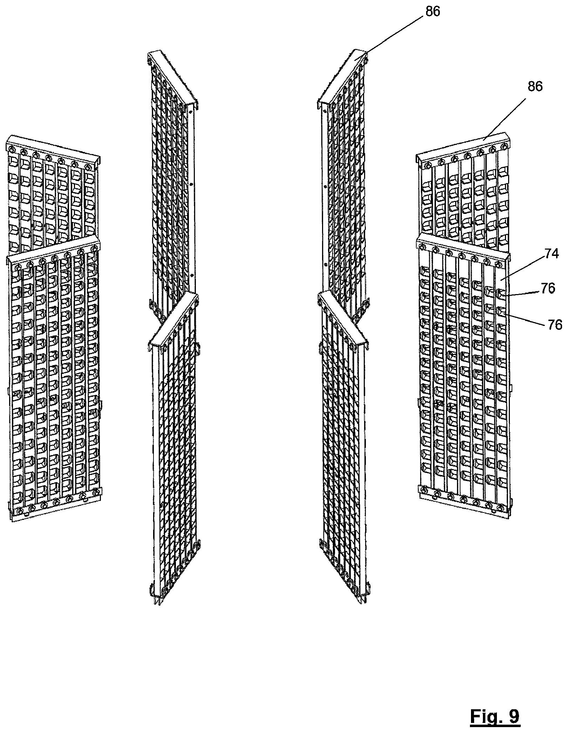

FIGURE 9 is a similar isometric view to Figure 8, but for a larger coil string array;
FIGURE 10 is an isometric view of the blocks of support brackets of Figure 8 showing the coil strings in place to form a heat exchange array;
FIGURE 11 is a similar view to Figure 10, but with inlet and outlet manifolds connected to the heat exchange array;
FIGURE 12 is an isometric vertical cross-sectional view through a lower portion of the heat exchange unit of Figure 1;
FIGURE 13 is an isometric view of the lower portion of Figure 12;
FIGURE 14 is a plan view of the lower portion of Figure 12;
FIGURE 15 is a vertical cross-section through the lower portion of the unit showing the heat exchange array in place; and
FIGURE 16 is a vertical cross-section through a portion of a heat exchange unit according to another another example.

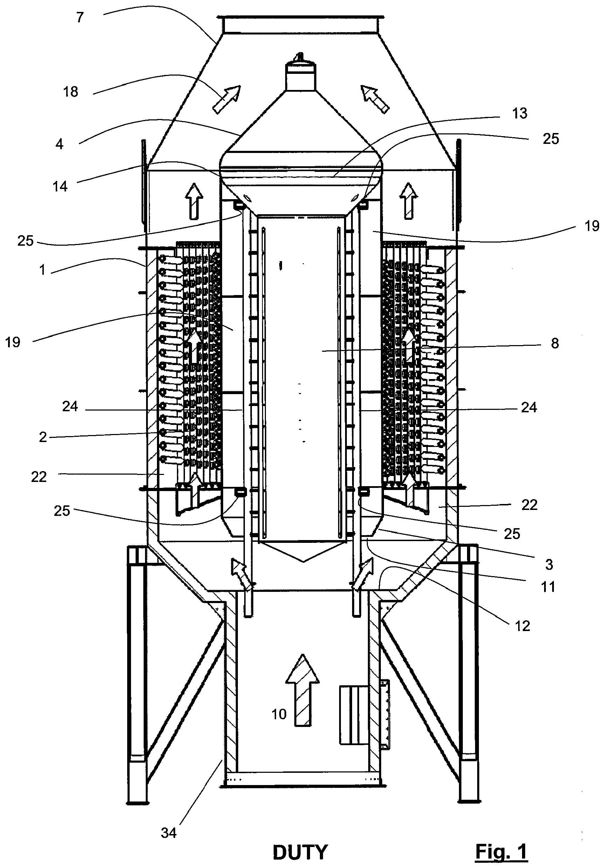

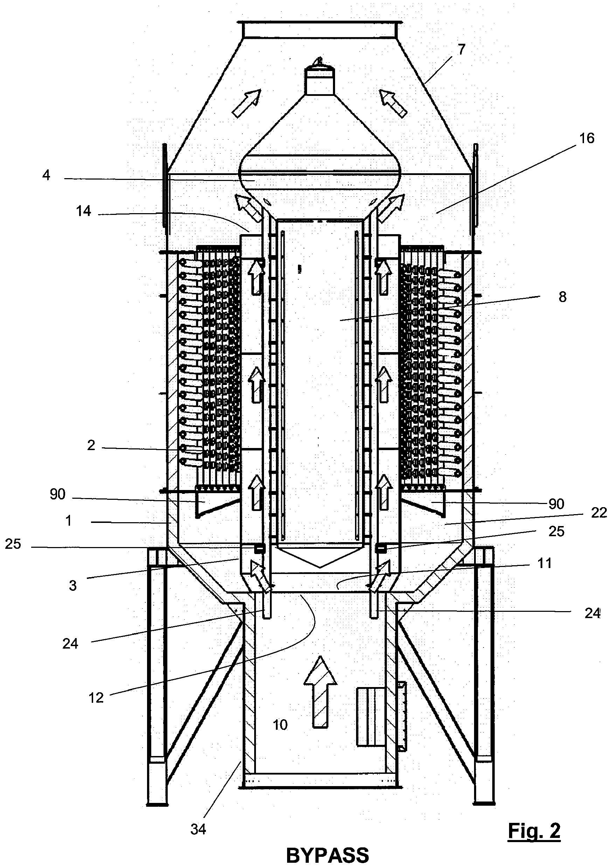

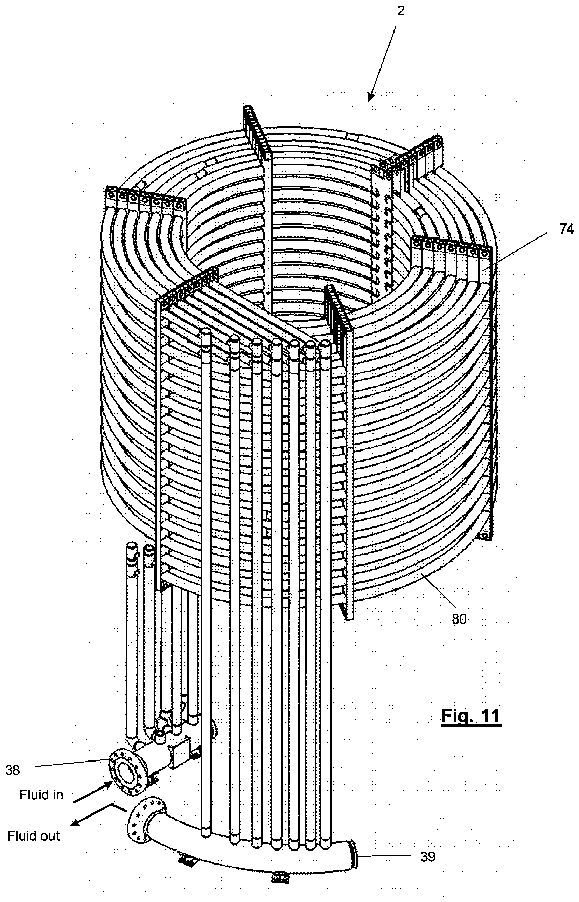

A heat exchange unit shown in Figures 1 and 2 is an exhaust gas heat recovery unit suitable for use, e.g. in the offshore oil and gas industries. Such units are generally cylindrical in shape and are typically used with their major axes orientated vertically. As indicated in Figure 1, such a unit is intended to receive hot gas 10 through gas inlet duct 34 from a gas turbine engine or other type of engine (not shown), cool the gas by heat exchange with a fluid circulating in a heat exchange array 2, and pass the cooled gas 18 onwards for venting from the gas exit duct 7 to a stack, or for further use. Heat exchange fluid is passed in and out of the heat exchange array through inlet and outlet manifolds 38, 39 (see Figure 11) and can be used as a process fluid or for generating steam or the like.

Referring to Figure 1 and 2 together, the heat exchange unit comprises a generally cylindrical outer casing or shell 1, containing an annular heat exchange array 2, an internal sleeve valve 3, and a valve plug 4. The casing 1 and sleeve valve define a duty passage 22 in which the heat exchange array 2 is located. The sleeve valve 3 is slideable axially within the heat exchange array 2 between two extreme positions.

In Figure 1, the sleeve valve 3 is shown at its upper extreme position, so that the valve sleeve's central passage 19, termed a bypass passage, is effectively closed, with substantially all the exhaust gas passing through the heat exchange array 2. In this position, the required gas seal to prevent flow through the bypass passage 19 is provided when an upper "knife edge" 14 of sleeve valve 3 buts against a valve seat 13 provided on the valve plug 4.

The valve plug 4 has a downward extension 8 which extends axially through the bypass passage 19 concentric with the shell. The extension acts as a flow splitter and has a cylindrical upper portion and a conical end portion.

In Figure 2 the sleeve valve 3 is shown at its lower extreme position, such that substantially all the hot gas 10 passes through the bypass passage 19, so bypassing the heat exchange array 2. In this position, lower valve seat 12 on the bottom of sleeve valve 3 forms a gas seal with a complementary seat 11 attached to the shell 1 below the heat exchange array 2, so causing the hot gas 10 to pass through the bypass passage 19 and out past the valve plug 4 through the annular opening 16 between the plug 4 and the outer components.

In operation, the sleeve valve may be positioned in either of the extreme locations discussed above, or intermediate positions in which a proportion of the flow passes through the duty passage 22, and a proportion through the bypass passage 19.

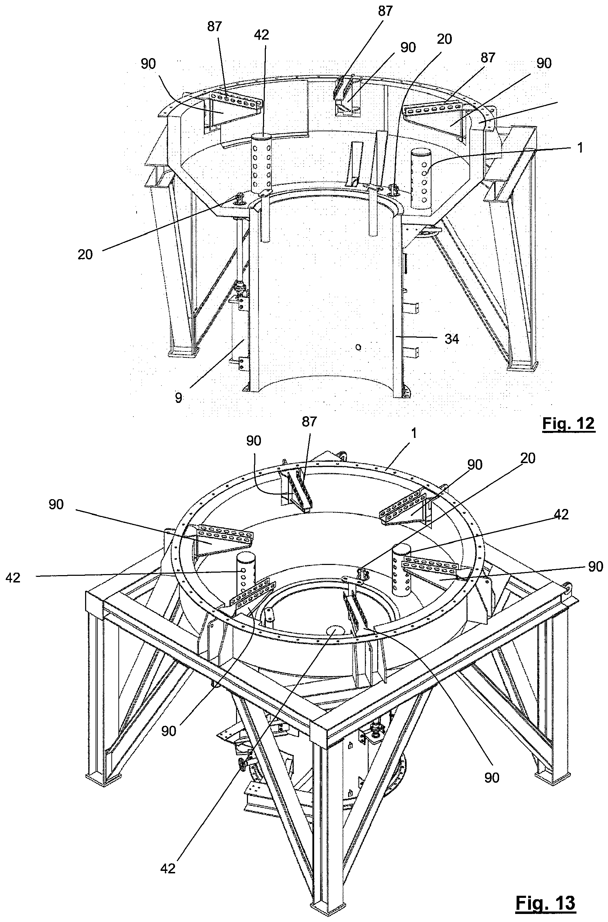

As shown in Figures 12 and 13, the sleeve valve 3 is attached at its lower end to rods 20 for moving the sleeve valve axially up and down within the heat exchange unit. The rods pass through gas seals (not shown) and are actuated by one or more actuation devices 9.

The actuation devices 9 may be hydraulic, pneumatic, electrical, or manually operated. For example, the rods 20 and hence the sleeve valve 3 may be raised and lowered by means of ball screw devices on lead screws driven by electric motors. Again, there should be at least three rods 20, each driven by an actuation device 9, equiangularly spaced around the assembly.

Lateral support of the sleeve valve 3, additional to that provided by rods 20, is desirable to prevent undue vibration of the sleeve valve and can be achieved in a number of different ways. In this embodiment, the downward extension 8 is provided with three guide rails 24 secured to its external surface. These guide rails 24 extend lengthwise of the sleeve and are spaced 120 degrees apart around it. The sleeve valve 3 is provided with rollers 25 which are free to run along the surface of rails 24.

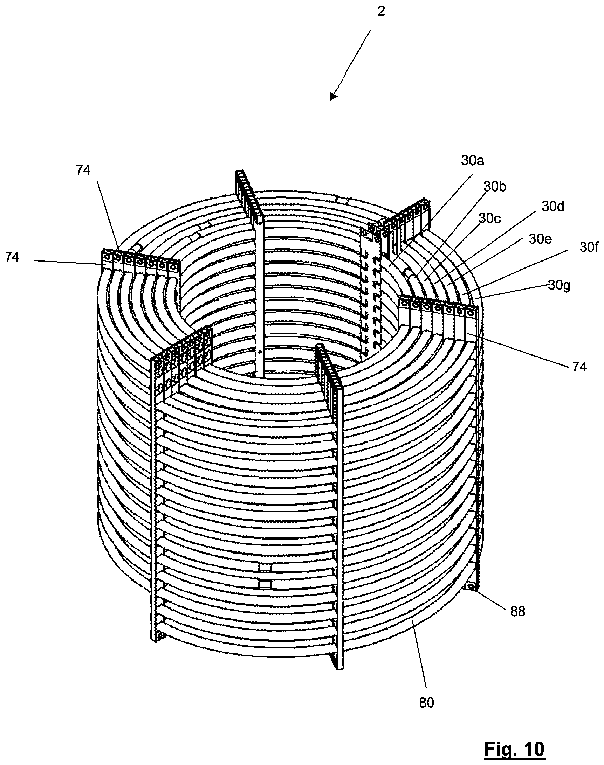

In contrast with the heat exchange array of the prior art heat exchange unit, in this embodiment the array is constructed from multiple helically wound coiled "strings" 30 of finned heat exchange tube arranged concentrically within the duty passage 22. This arrangement can be seen most clearly in Figure 10, in which seven strings 30a to 30g are arranged.

It is desirable to have the same length tube for the radially innermost string 30a as for the outermost string 30g in order that the fluid in all strings is heated to the same degree. Thus, the pitch between adjacent windings on the outermost string 30g is greater than for the innermost string 30a in order to account for the greater diameter of the outermost string 30g.

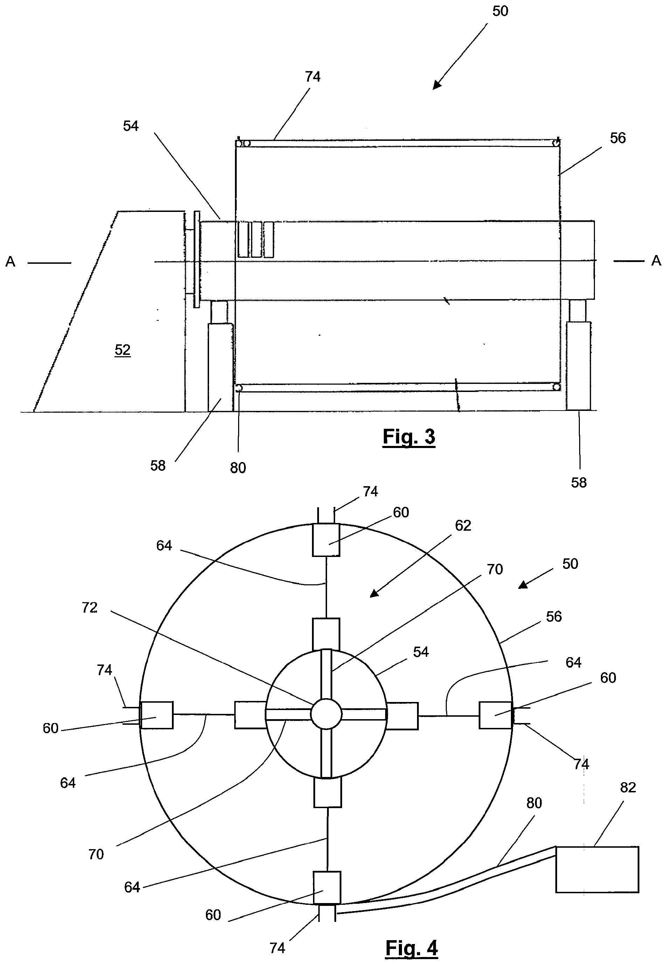

A mandrel 50 according to a preferred embodiment of the present invention for forming such strings 30 is shown in side, end and cross-sectional views in Figures 3, 4 and 5 respectively in a simplified form. As can be seen from Figure 3, the mandrel is arranged with its axis of rotation A-A being substantially horizontal. A drive arrangement 52 is provided at one end and is arranged to drive a central axle 54 of a main mandrel roller 56. The axle is supported on bearings 58 proximate each end thereof.

With reference to the end view of Figure 4, it can be seen that the roller comprises a plurality of beams 60 arranged around its circumference, and extending the length of the roller. Although only four beams are shown in Figure 4, the roller would typically include 36 such beams extending parallel to each other with an equal angular spacing. In this embodiment, each beam 60 is provided with a three support arrangements indicated generally at 62, which enable the beam to be adjusted radially outwards and inwards with respect to the axle 54. In other embodiments, the number of support arrangements 62 may be varied according to the required length of the beam 60.

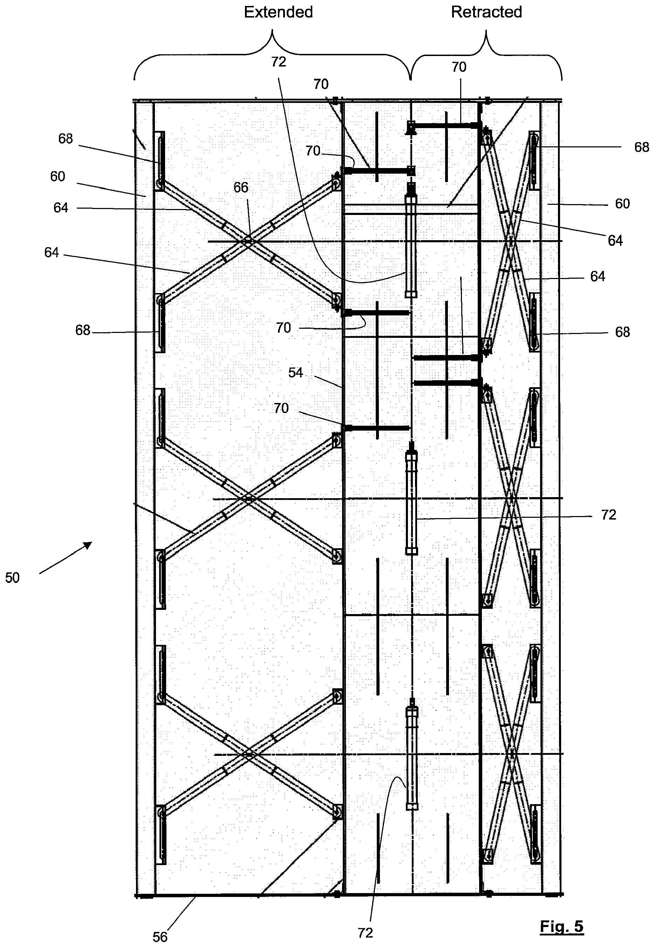

Figure 5 shows the extremes of the positions of the beam 60, and it can be seen that this support arrangement comprises pairs of support struts 64 connected about a central pivot point 62 to form a scissor arrangement. The radially outermost ends of the struts 64 are slideable within axially extending guide slots 68 mounted to the beams 60. The radially innermost ends of the support struts 64 are pivotably connected to the ends of radially extending arms 70 of spiders that are moveable axially under the influence of a hydraulic ram 72 located in alignment with the centre of rotation of the roller 56. It will be appreciated that a single hydraulic ram 72 can be connected to all 36 parallel beams arranged around the circumference of the roller 56 by the spiders so that each beam 60 can be extended and retracted simultaneously.

When the rams 72 are fully retracted, the scissor action of the support struts 64 moves the beams 60 connected thereto to their radially outermost position, whereas when the hydraulic rams 72 are fully extended, the beams will be in their radially innermost position.

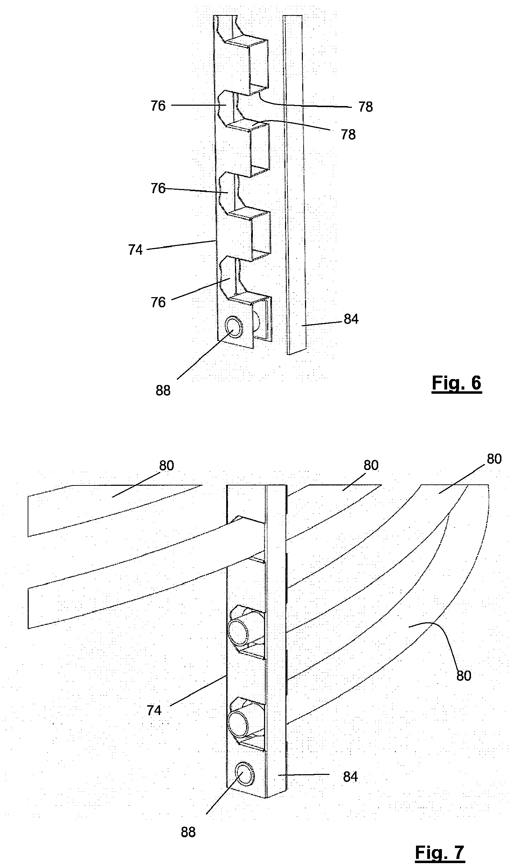

To construct a single helical tube string 30, the desired inner radius thereof is first set using the adjustable support arrangement 62 via a suitable control system that is calibrated or has sensors to provide feedback on the positions of the beams 60. Thus the setting step can be achieved rapidly, improving the efficiency of the manufacturing process. Tube support brackets 74 (see in particular Figures 4, 6 and 7) are removably attached to a number of the beams (typically 6 or 8) and are intended to hold each tube winding in its desired position. As can be seen most clearly from Figure 6, each support bracket 74 is formed from a channel profile in which slots 76 are formed by 'L' shaped cuts in the flanges and folding the tongues formed by these cuts inwardly to provide all the "crenellated" shape shown in Figure 6.

It can be seen that the tongues 78 extend across from one flange to the other to form a box-like structure and may be welded to the opposite flange to strengthen the support bracket 74.

Drive from the drive arrangement 52 commences and the finned tube 80 is fed from a indexing carriage 82 onto the roller 56. The end of the tube is held to the roller so that the tube sits within an slot 76 at the end of one support bracket 74. As the roller 56 rotates, the indexing carriage moves progressively along the length of the roller 56 so that the tube 80 is aligned with the appropriate slots on successive support brackets and the correct pitch between adjacent windings of the helix is maintained. The tube 80 may be heated as it is fed on to the roller 56 so that a lower bending moment is required for it to conform to the shape of the roller.

Once a complete string 30 has been wound onto the roller 56 a cover strip 84 is attached to each support bracket 74, e.g. by welding, so as to hold the tube 80 within the slots 76, as can be seen in Figure 7.

Multiple lengths of tube can be simultaneously fed onto adjacent slots 76 in the support brackets 74 to result in the double helix arrangement shown in Figure 7. As discussed above, the pitch or spacing between adjacent slots 76 can be adjusted to ensure that the length of tubing of each string within a heat exchange array is substantially the same. Once the string has been completed, it may removed from the mandrel roller 56, and the beam radius readjusted to proceed with the next string of the heat exchange array.

Once all the strings 30 have been manufactured using the method set out above, and any subsequent heat treatment to remove residual stresses has been carried out, the strings can be assembled together in the concentric "Russian Doll" array 2 shown in Figure 10. This may either be carried out in-situ on the heat exchange unit, or remotely therefrom.

In either case, the tops of the strings 30 are connected together with tie-bars 86 by using bolts that extend through holes in the tie-bars and corresponding bores 88 at the ends of each support bracket 74. In one embodiment, similar bottom tie bars 87 can connect the bottoms of the strings, but these have an additional channel 89 extending downwardly therefrom for connection to supports in the heat exchange unit. Alternatively, the bottoms of the support brackets may connect directly to the supports.

As well as the adjustable mandrel 50 being used to individually form single strings 30 of coiled tubing, multiple strings may be built up on the mandrel using a "coil-on-coil" process. In this process the inner radius of the heat exchange array 2 is set by the beams 60, but once the innermost string has been completed, the support brackets for the next string are attached on top of the support brackets 74 (e.g. by welding) for the first string and the finned tube 80 is coiled onto these brackets. The process is repeated until all the strings that are to make up the heat exchange array 2 are complete. The entire heat exchange array 2 is then removed from the mandrel roller 56 in one go.

In other embodiments, a standard mandrel may be used for the coil-on-coil method, but the inner diameter would be fixed.

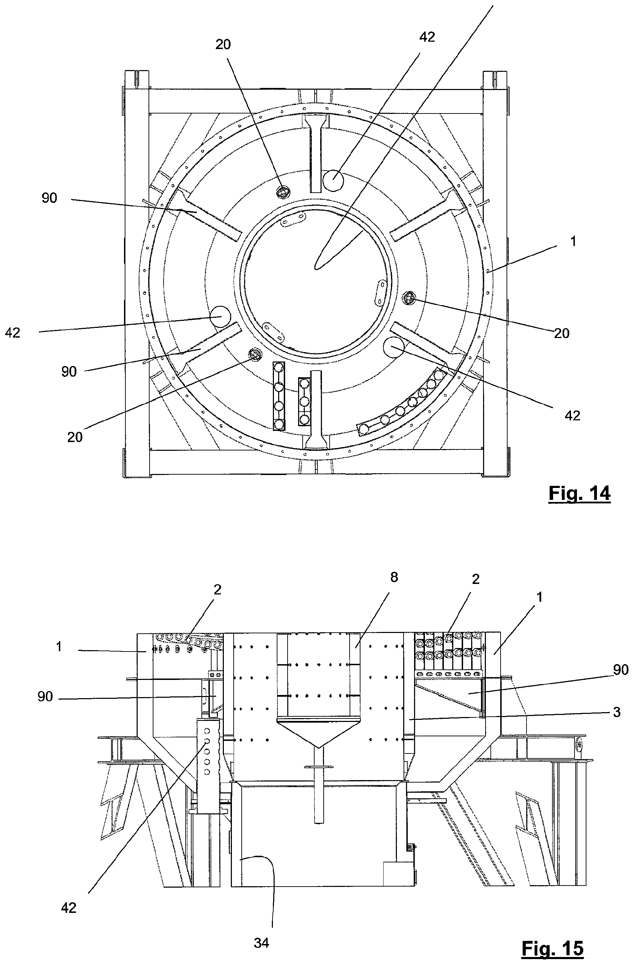

Turning now to Figures 12 to 15, a support arrangement for the heat exchange array 2 can be seen more clearly. In these figures, six heat exchange array support arms 90 are mounted to the outer casing 1 and extend radially inwardly in a cantilevered manner. In these figures, the lower tie-bars 87 for the support brackets 74 are shown attached to the arms 90. Therefore, when the heat exchange array 2 is placed on top of the support brackets 90 during assembly, the tie-bars 87 can be secured to the support brackets 74 in situ and the array 2 is supported by the arms 90 as illustrated in Figure 15.

As a result of this arrangement, when the tube strings 30 are supported only by the arms 90 and are not connected to their adjacent strings, it is possible to remove the tie-bars 86 at the top of the strings and unbolt the bolts connecting a particular string to the bottom tie-bars 87 and individually remove that string 30 from the heat exchange unit 2, whilst the remainder are still in place. This can make the maintenance of the unit significantly easier, should a fault develop in a individual coil string 30. Furthermore, it is possible to lift individual strings 30 into place on the heat exchange unit one by one, meaning that a lower capacity crane or hoist may be used during assembly.

Also visible in Figures 12 to 15 are three substantially cylindrical cooling tubes 42. These tubes 42 are located in the space below the heat exchange array 2 and extend upwardly from the casing 1 where it tapers inwardly to meet the inlet duct 34. Each tube 42 is provided with a feed of ambient temperature air from a fan (not shown) via a manifold (not shown). Each of the tubes 42 is provided with a number of vent holes to allow the air to escape.

When the heat exchange unit is in the bypass state, air is blown through the cooling tubes 42 and this provides two functions. First, it helps equalise the pressure between the bypass passage 19 and the duty passage 22 when the exhaust gas passes through the bypass passage. This helps to minimise the exhaust gas that may otherwise pass through the bottom valve seat 12 and continue to cause a degree of heating to the fluid in the tubes of the heat exchange array 2.

In addition, when in bypass mode, heat from the exhaust gas inevitably continues to radiate to a certain extent out into the heat exchange array 2. The flow of cooling air from the cooling tubes 42 over the heat exchange array 2 helps to eradicate or at least minimise this heating effect. In the prior art heat exchange unit, it was necessary to provide a dump cooler to separately cool the fluid if it had dwelt in the heat exchange array 2 for a significant period. The cooling tubes 42 eliminate the need for a dump cooler in the present embodiment.

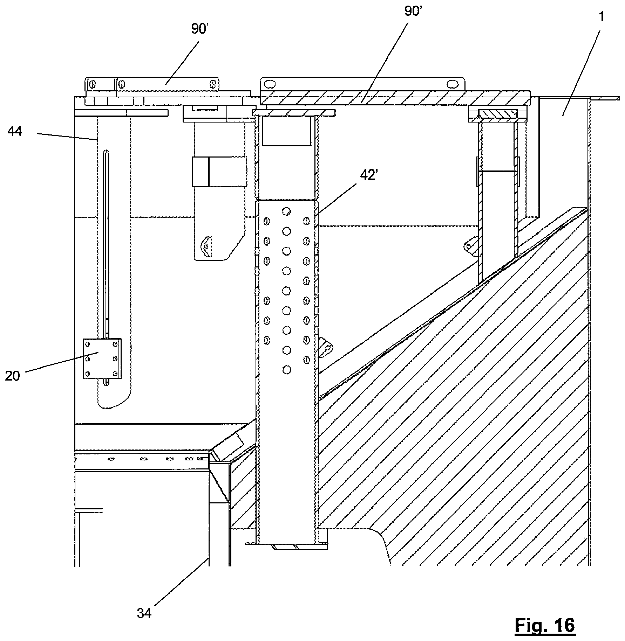

Figure 16 illustrates a particularly preferred arrangement of cooling tubes 42' and control rods 20 for the sleeve valve 3. In this arrangement, the cooling tubes 42' and a cylindrical housing 44 for the rods act as supports for the heat exchange array support arms 90'. As a result, the strength of the connection of the support arms 90' to the casing may be reduced by comparison to the cantilevered arms of the embodiment of Figures 12 to 15, or no connection to the casing 1 may be provided at all.

The various features outlined above provide a heat exchange unit that is more efficient in operation, as well being easier to manufacture, assemble and maintain.

The heat exchange unit may be adapted to function with its major axis arranged in a substantially horizontal orientation. The gas may be directed to flow downwardly rather than upwardly with minor alterations to the unit. Various alternatives to the scissor and hydraulic ram arrangement may be provided to adjust the diameter of the mandrel, such as an electric motor and rack and pinion gear arrangement in which the rack extends radially outwardly to directly move a beam, or replaces the hydraulic rams in the assembly of Figure 5.

## Claims

1. A mandrel (50) for forming helically coiled heat exchange tubes (80), the mandrel comprising:
a roller (56) to form the tube into a helical coil;
a drive (52) for rotating the roller;
a carriage (82) for indexing the tube with respect to the roller, wherein the roller comprises a plurality of winding beams (60);
**characterised in that**;
the beams are arranged to be radially movable by associated powered adjustable supports (64) so as to permit rapid setting of the radius of a heat exchange coil formed on the roller,
wherein at least one winding beam comprises a slotted coil support bracket (74) to maintain the pitch between adjacent sections of the helix.

2. A mandrel according to claim 1 wherein the supports comprise a hydraulic ram (9) to effect adjustment.

3. A mandrel according to claim 1 wherein the supports comprise a motor and gear arrangement.

4. A mandrel according to claim 3 wherein the gear arrangement includes a rack and pinion gear.

5. A mandrel according to any one of claims 2 to 4 wherein the adjustment is effected by a scissor arrangement (62) of support struts.

6. A method of forming a heat exchange array (2) using a mandrel (50) according to any preceding claim, the method comprising the steps of:
a) providing at least one coil support bracket (74) on a winding beam (60);
b) setting the required radius of the winding beams;
c) holding one end of the heat exchange tube to the roller;
d) rotating the roller, whilst feeding the heat exchange tube and indexing the tube along a length of the roller to form a helically coiled tube string;
e) removing the coiled string from the roller; and
f) repeating steps a) to e) to form a further coiled tube string of a differing diameter.

7. A method of forming a heat exchanger array according to claim 6 further comprising a step g) of attaching together the two coiled tube strings.

8. A method of forming a heat exchanger according to claim 7 wherein in step g) the at least two coiled tube strings are attached together via the coil support brackets (86).

9. A method according to any one of claims 6 to 8 wherein in step c) the tube is held to the coil support bracket.

10. A method according to any one of claims 6 to 9 comprising a further step h) after step d) of securing a cover over the coiled tube string on the coil support bracket to hold the coiled tube string tube in position on the bracket.

## Patentansprüche

1. Dorn (50) zum Herstellen von spiralgewickelten Wärmeaustauscherrohren (80), wobei der Dorn umfasst:
eine Walze (56) zum Formen des Rohres zu einer spiralförmigen Spule,
einen Antrieb (52) zum Drehen der Walze;
einen Schlitten (82) zum Weiterschalten des Rohres relativ zur Walze,
wobei die Walze eine Mehrzahl von Wickelbäumen (60) aufweist;
**dadurch gekennzeichnet,**
**dass** die Bäume derart angeordnet sind, dass sie durch zugeordnete angetriebene Stützen (64) radial bewegbar sind, so dass sie eine zügige Einstellung des Radius der auf der Walze gebildeten Wärmeaustauscherspirale ermöglichen,
wobei mindestens ein Wickelbaum eine geschlitzte Spulenhalterung (74) zum Beibehalten der Steigung zwischen den benachbarten Abschnitten der Spirale aufweist.

2. Dorn nach Anspruch 1, wobei die Stützen einen Hydraulikzylinder (9) zum Bewirken der Einstellung umfassen.

3. Dorn nach Anspruch 1, wobei die Stützen eine Motor- und Getriebeanordnung umfassen.

4. Dorn nach Anspruch 3, wobei die Getriebeanordnung ein Zahnstangengetriebe umfasst.

5. Dorn nach einem der Ansprüche 2 bis 4, wobei die Einstellung durch eine Scherenanordnung (62) von Stützstreben erfolgt.

6. Verfahren zum Bilden einer Wärmeaustauschanordnung (2) mittels eines Dorns (50) nach einem der vorhergehenden Ansprüche, wobei das Verfahren die folgenden Schritte umfasst:
a) das Vorsehen wenigstens einer Spulenhalterung (74) an einem Wickelbaum (60);
b) das Einstellen des erforderlichen Radius der Wickelbäume;
c) das Halten eines Endes des Wärmeaustaucherrohres an die Walze;
d) das Drehen der Walze während der Zuführung des Wärmeaustauscherrohres und des Weiterschaltens des Rohres entlang einer Länge der Walze zum Bilden eines spiralförmig gewickelten Rohrstrangs;
e) das Entfernen des gewickelten Strangs von der Walze; und
f) das Wiederholen der Schritte a) bis e) zum Bilden eines weiteren gewickelten Rohrstrangs anderen Durchmessers.

7. Verfahren zum Bilden einer Wärmeaustauschanordnung nach Anspruch 6, ferner umfassend einen Schritt g) des Befestigens der beiden gewickelten Rohrstränge aneinander.

8. Verfahren zum Bilden einer Wärmeaustauschanordnung nach Anspruch 7, wobei in Schritt g) die wenigstens zwei gewickelten Rohrstränge über die Spulenhalterungen (86) aneinander befestigt werden.

9. Verfahren nach einem der Ansprüche 6 bis 8, wobei in Schritt c) das Rohr an die Spulenhalterung gehalten wird.

10. Verfahren nach einem der Ansprüche 6 bis 9, umfassend einen nach Schritt d) weiteren Schritt h) des Sicherns einer Abdeckung über dem gewickelten Rohrstrang an der Spulenhalterung, um das gewickelte Rohrstrangrohr an der Halterung in Position zu halten.

## Revendications

1. Mandrin (50) permettant de former des tubes d'échange de chaleur (80) enroulés en hélice,
ce mandrin comprenant :
- un rouleau (56) permettant de mettre en forme le tube selon une bobine hélicoïdale,
- un entraînement (52) permettant de faire tourner le rouleau,
- un chariot (82) permettant d'indexer le tube par rapport au rouleau, le rouleau comprenant un ensemble de poutres d'enroulement (60),
**caractérisé en ce que**
les poutres sont agencées pour pouvoir être déplacées radialement par des supports réglables motorisés associés (64) pour permettre un réglage rapide du rayon d'une bobine d'échange de chaleur formée sur le rouleau,
au moins une poutre d'enroulement comprenant un support de montage de bobine fendu (74) permettant de maintenir le pas entre des sections adjacentes de l'hélice.

2. Mandrin conforme à la revendication 1,
dans lequel les supports comprennent un vérin hydraulique (9) permettant d'effectuer le réglage.

3. Mandrin conforme à la revendication 1,
dans lequel les supports comportent un moteur et un agencement d'engrenage.

4. Mandrin conforme à la revendication 3,
dans lequel l'agencement d'engrenage comporte un engrenage à pignon et crémaillère.

5. Mandrin conforme à l'une quelconque des revendications 2 à 4,
dans lequel le réglage est effectué par un agencement en ciseau (62) d'entretoises de support.

6. Procédé permettant de former un réseau échangeur de chaleur (2) en utilisant un mandrin (50) conforme à l'une quelconque des revendications précédentes,
ce procédé comprenant des étapes consistant à :
a) positionner au moins un support de montage de bobine (74) sur une poutre d'enroulement (60),
b) régler le rayon nécessaire des poutres d'enroulement,
c) maintenir une extrémité du tube d'échange de chaleur sur le rouleau,
d) faire tourner le rouleau en alimentant le tube échangeur de chaleur et indexer le tube sur la longueur du rouleau de façon à former un cordon tubulaire enroulé en hélice,
e) enlever le cordon enroulé du rouleau, et
f) réitérer les étapes a) à e) pour former un autre cordon tubulaire enroulé ayant un diamètre différent.

7. Procédé permettant de former un réseau échangeur de chaleur conforme à la revendication 6,
comprenant en outre une étape g) consistant à fixer l'un à l'autre les deux cordons tubulaires enroulés en hélice.

8. Procédé permettant de former un réseau échangeur de chaleur conforme à la revendication 7,
selon lequel lors de l'étape g) les deux cordons tubulaires enroulés en hélice sont fixés l'un à l'autre par l'intermédiaire des supports de montage de bobine (86).

9. Procédé conforme à l'une quelconque des revendications 6 à 8,
selon lequel lors de l'étape c) le tube est maintenu sur le support de montage de bobine.

10. Procédé conforme à l'une quelconque des revendications 6 à 9, comprenant en outre une étape h) mise en oeuvre après l'étape d) consistant à fixer un couvercle au-dessus du cordon tubulaire enroulé sur le support de montage de bobine pour maintenir le cordon tubulaire enroulé en position sur le support.
